# EUROPÄISCHE PATENTSCHRIFT

(11) **EP 0 492 346 B1**
(45) Veröffentlichungstag und Bekanntmachung des Hinweises auf die Patenterteilung: **06.10.1993**
(21) Anmeldenummer: 91121534.1
(22) Anmeldetag: 16.12.1991
(51) Int. Cl.: F01L 3/20, F02M 57/04, F02B 19/14

(54) **Brennkraftmaschine, insbesondere Dieselmotor**
Internal combustion engine, especially Diesel engine
Moteur à combustion interne, notamment moteur Diesel

(30) Priorität: 21.12.1990 DE 4041443
(43) Veröffentlichungstag der Anmeldung: 01.07.1992
(73) Patentinhaber: Krupp MaK Maschinenbau GmbH, 24159 Kiel (DE)
(72) Erfinder: Heintze, Wolfgang, W-2300 Kronshagen (DE)
(74) Vertreter: Hansmann, Dierk, Dipl.-Ing.

(56) Entgegenhaltungen:
- FR-A- 722 465
- GB-A- 2 227 055
- US-A- 2 179 278
- US-A- 2 246 280

## Beschreibung

Die Erfindung bezieht sich auf eine Brennkraftmaschine, insbesondere Dieselmotor mit intermittierender, direkter Einspritzung von Kraftstoff in eine Brennkammer, in die über ein Einlaßventil Frischluft zuführbar und diese mit dem eingespritzten Kraftstoff in der Kammer verwirbelbar ist.

Bekannte Brennräume für Dieselmotoren mit direkter Einspritzung weisen Kolbenwölbungen und somit große Wärmeeinfallflächen auf. Ein weiterer verbrennungstechnischer Mangel sind große Wandauftragungen des Kraftstoffs mit verzögerter Abdampfgeschwindigkeit infolge der relativ kalten Wände. Folglich wird auch nur ein verzögertes Durchbrennen des Kraftstoffs erzielt und die Luft weist im allgemeinen keine ausreichende Zirkulation auf. Durch die zentrale Lage des Einspritzventils wird die freie Strahlenlänge, insbesondere bei kleinen Zylinderdurchmessern, der Einspritzstrahlen begrenzt.

Bei Auslaßventilen von Zweitaktmaschinen ist es gemäß US-A-2246280 bereits bekannt, Kolbenwölbungen vorzusehen und dabei im Bereich des Auslaßventils eine zum Arbeitskolben hin sich erweiternde trichterartige Kammer zu bilden.

Aufgabe der Erfindung ist es, eine hochdruckfähige luftverdichtende Brennkraftmaschine der gattungsgemäßen Art mit einem Verbrennungssystem, bestehend aus einer Brennkammer mit einer gezielten Luftbewegung zu schaffen, wobei ein ausreichend großer Querschnitt im Verbindungsbereich zum Arbeitsraum ermöglicht und eine günstige Durchmischung auch von der Luftseite gewährleistet wird.

Diese Aufgabe wird erfindungsgemäß durch die Merkmale des Anspruchs 1 gelöst. Weitere vorteilhafte Ausgestaltungen werden durch die Merkmale der Unteransprüche gekennzeichnet.

Durch die Ausbildung des Brennraumes im Einlaßventil als trichterförmige sich zum Arbeitszylinder hin erweiternde Kammer, können die Einspritzstrahlen aus der in der Trichterspitze angeordneten Einspritzdüse in idealer Weise ohne Behinderung austreten, wodurch eine direkte Anspritzung wassergekühlter oder ölgekühlter kalter Wände im wesentlichen vermieden wird. Auch wird die freie Strahlenlänge der Einspritzstrahlen verlängert.

Im unteren Bereich des Brennraumes ist ein Drallring angeordnet, wodurch es möglich wird, den weitaus größten Teil der Verbrennungsluft vom Kolben in der Schlußphase der Verdichtung über diesen Drallring zu drücken, wodurch im Brennkammerkegel ein extremer Luftwirbel erzeugt wird. Die inneren Kanten der Drallstege liegen vorzugsweise mitten in der Flammfront, so daß sie sich hier auf Glühtemperatur aufheizen können. Die glühenden Stegenden übernehmen dann die Initialzündung und wirken neben einem angehobenen als Verdichtungsverhältnis äußere Zündhilfe. Das bringt in vorteilhafter Weise einen geringen Zündverzug bei schwer zündenden Kraftstoffen mit sich.

Da die Elemente - Einlaßventil mit Brennkammer, Drallring und Einspritzdüse in einem hülsenförmigen, zylindrischen Stellelement zu einer Einheit zusammengefaßt sind, ergibt sich im Zylinderdeckel eine kompakte und einfach zu montierende Baueinheit. Vorzugsweise wird das Stellelement mit einer Pneumatik oder Hydraulik abgeschlossen und durch Anheben oder Absenken wird ein variables Verdichtungsverhältnis erzielt. Durch die Anordnung der Brennkammer im Einlaßventil kann der Kolben flach ausgeführt werden und daß der Kolben bis unmittelbar an dem Zylinderdeckel führt, trifft eine harte Zünddruckspitze nicht sofort die gesamte Kolbenfläche. Sie kann bei Bedarf auch durch ein zusätzliches Dämpfelement in der Pneumatik am Stellelement gespeichert und dadurch weiter entschärft werden. Durch die graduelle Trennung des Brennraumes vom Arbeitsraum wirkt ein früher Einspritzbeginn auch nicht so hart auf den Kolben und das Triebwerk.

Durch die konstruktive Zusammenfassung des Einlaßventils mit Brennkammer sowie der Einspritzdüse mit dem Einspritzventil wird Platz geschaffen für eine wesentliche Vergrößerung der Ventilflächen, so daß nunmehr für einen Drei-Ventiler (zwei Auslaßventile und ein Einlaßventil), im Auslaß und im Einlaß eine wesentliche Querschnittsvergrößerung gegenüber herkömmlichen Brennkraftmaschinen erzielt wird und damit eine Erhöhung der mittleren Kolbengeschwindigkeit durchgeführt werden kann ohne Nachteile für die Luftversorgung zu erhalten.

Das Problem der Restgasausspülung wird über Spülschlitze in der Brennkammer gelöst. Die Freigabe des Einlaßventilquerschnittes am eigentlichen Sitz wird hubmäßig so verzögert, daß zuerst die Spülschlitze Querschnitt freigeben und jeder Landungswechsel mit dem Sauberspülen der Brennkammer beginnt. Erst bei weiterem Hub wird der äußere Ventilquerschnitt vollständig freigegeben, so daß eine zügige Befüllung des Zylinders mit Frischluft erfolgt. Weitere Spülschlitze im Ventilschaft kühlen intensiv die Einspritzdüse mit kalter Ladeluft.

Da die Brennkammer mitten im Einlaßtrakt des Zylinderdeckels liegt, wird sie nur mit Ladeluft gekühlt. Der Wärmeübergang zum Kühlwasser ist unterbrochen, die Wärme verbleibt im Arbeitsgas und erhöht den Prozeßwirkungsgrad. Ebenso wird der Wärmeübergang zum Kolben reduziert, da einmal die Wärmeübertragungsfläche kleiner ist und desweiteren die Flammfront nur noch einen kleinen Teil des Bodens erreicht. Dasselbe gilt für den Zylinderdeckel.

Die kritischen Bereiche des Feuerstegs, der Laufbuchse sowie die Auslaßventile liegen im Flammenschatten und sind somit der intensiven Aufheizung entzogen, so daß eine Reduzierung der Feuersteghöhe in Betracht zu ziehen ist.

Die Anordnung mit einem relativ großen Einlaßventil und zwei mittelgroßen Auslaßventilen ergibt eine vorteilhafte Kipphebelanordnung.

Die relativ großen Auslaßventile sowie ein großes Einlaßventil lassen noch genügend Platz für ein Gas-/oder Dampfventil. Ein separates Dampfventil bringt Vorteile bei der Schadstoffbegrenzung und kann dabei helfen, die Ladungswechselarbeit günstiger zu gestalten. Der Platz kann aber auch für ein Gasventil vorbehalten werden, damit eine Verbrennung auch mit gasförmigen Kraftstoffen möglich wird.

Ein Ausführungsbeispiel der Erfindung ist in der Zeichnung schematisch dargestellt. Es zeigen:

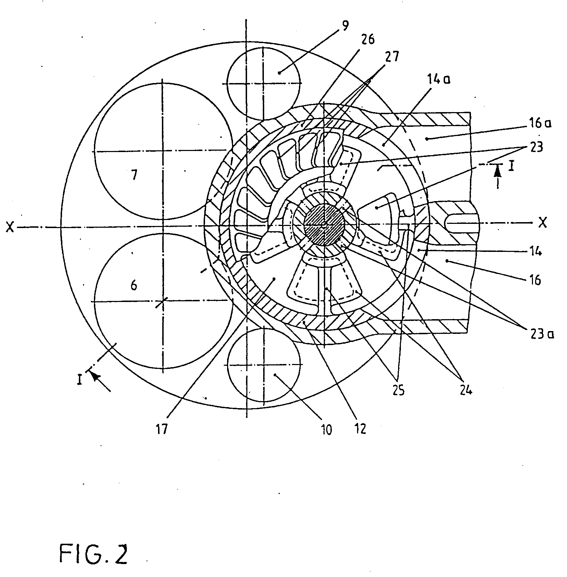

- Fig. 1: einen Querschnitt eines im Zylinderdeckel angeordneten Einlaßventils mit einer trichterförmigen Brennkammer und Einspritzdüse nach Linie I-I der Fig. 2,
- Fig. 2: einen Schnitt nach der Linie II-II der Fig. 1 durch das Einlaßventil.

Die Brennkraftmaschine umfaßt im wesentlichen einen Zylinderblock 1, einen Zylinder 2 mit Kolben 3 und Kolbenringen 3a, dem in einem Zylinderdeckel 4 ein Einlaßventil 5 und zwei Auslaßventile 6 und 7 gegenüberstehen, wobei zusätzlich noch ein Dampf- oder Gasventil 9 und ein Anlaßventil 10 vorgesehen ist.

Das Einlaßventil 5 ist mit seinem Schaft 5a in einer Hülse 12a eines zylindrischen Stellelements 12 axial bewegbar geführt und stützt sich endseitig an einer Stirnseite 13 des Elementes 12 ab. Dieses ist im Zylinderdeckel 4 gehalten und weist Luftöffnungen 14, 14a auf, die mit Lufteinlaßkanälen 16, 16a eines Einlaßtrakts 17 verbunden sind.

Das Einlaßventil 5 weist eine trichterförmige und sich zum Kolben 3 bzw. zum Zylinder 2 hin erweiternde Brennkammer 18 auf, wobei in der Trichterspitze 19 die Einspritzdüse 20 eines Einspritzventils 21 vorgesehen ist, welche im Schaft 5a des Einlaßventils 5 geführt wird. Der Brennraum 18 ist vorzugsweise so kegelförmig gestaltet, daß die Einspritzstrahlen unbehindert von Wandungen sich ausbreiten können.

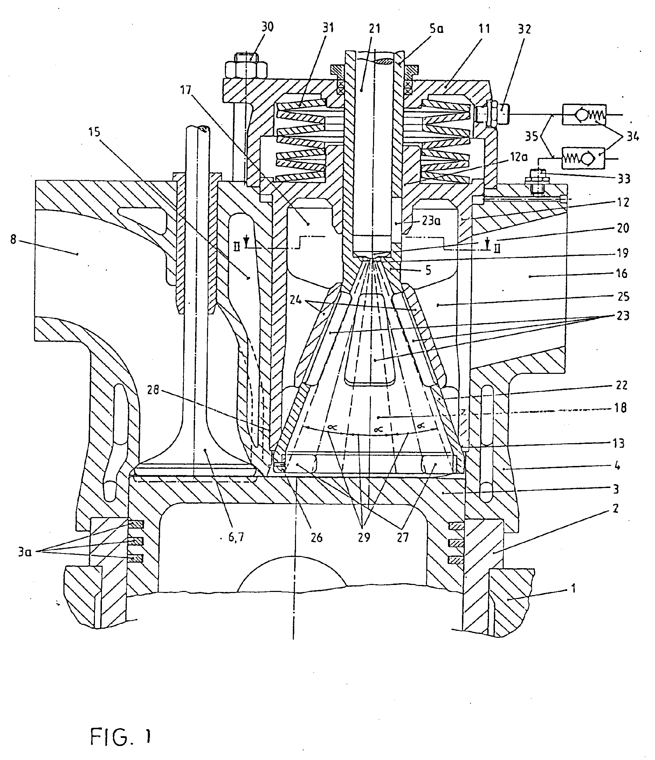

Die Brennkammer 18 weist eine symmetrische Kegelform auf und liegt im Einlaßtrakt 17. In der Wandung 22 der Brennkammer 18 sind mehrere mit Abstand zueinander angeordnete Spülschlitze 23 angeordnet, welche in geschlossener Stellung des Einlaßventils 5, wie Fig. 1 näher zeigt, von gegenüberstehenden Wänden 24 mehrerer mit dem Stellelement 12 verbundener Abstützelemente 25 des Einlaßventils 5 dicht abgeschlossen sind.

Das Einlaßventil 5 weist im angrenzenden Bereich zum Kolben 3 bzw. zum Zylinder 2 einen in einer horizontalen Ebene angeordneten Drallring 26 auf. Dieser umfaßt schräg nach oben ausgerichtete Lamellen 27, deren innere Kanten, hauptsächlich im Bereich die während der Verbrennung sich ausbildenden Flammfront stehen.

Das Stellelement 12 ist in einer Aufnahme 28 des Zylinderdeckels 4 über einen Kopfdeckel 11 mittels Schrauben 30 festgesetzt und stützt sich über innerhalb des Kopfdeckels 11 angeordnete Druckfedern 31, wie z. B. Tellerfedern , elastisch ab. Desweiteren sind Anschlüsse 32, 33 zur Zuführung von einem dem Stellelement 12 druckbeaufschlagenden Medium vorgesehen, um eine axiale Verstellung des Stellelements 12 zwecks einer Veränderung des Verdichtungsverhältnisses bewirken zu können. Auch kann das Stellelement 12 als ein pneumatisches Dämpfglied mit pneumatischen Steuerelement 34 im oberen Bereich ausgebildet sein.

Das Einlaßventil 5 ist vorzugsweise mittig einer senkrechten Mittenebene X-X des Zylinders 2 bzw. des Kolbens 3 angeordnet, wobei die Auslaßventile 6 und 7 zu beiden Seiten dieser Mittenebene X-X liegen. Die Brennkammer 18 des Einlaßventils 5 weist somit eine Öffnungsfläche auf, die nur einem kleineren Bereich der Stirnfläche des Kolbens 3 zugerichtet ist.

Die Elemente Einlaßventil 5 mit Brennkammer 18, Drallring 26 und Einspritzventil 21 sind zu einer kompakten Baueinheit im zylindrischen Stellelement 12 zusammengefaßt, so daß sich Ventile 5, 6 und 7 relativ großer Querschnittsfläche ergeben.

Im Betrieb der Brennkraftmaschine wird das Einlaßventil 5 erst voll geöffnet, wenn vorher die Spülschlitze 23 geöffnet waren, wodurch jeder Ladungswechsel mit einem Sauberspülen der Brennkammer 18 eingeleitet wird. Erst bei einem weiteren Hub des Einlaßventils wird eine zügige Befüllung des Zylinders mit Frischluft vorgenommen. Weitere Spülschlitze 23a sind im Ventilschaft 5a angeordnet, die die Einspritzdüse 21 mit kalter Ladeluft kühlen.

## Patentansprüche

1. Brennkraftmaschine, insbesondere Dieselmotor, mit intermittierender, direkter Einspritzung von Kraftstoff in eine Brennkammer (18), in die über ein Einlaßventil (5) Frischluft zuführbar und diese mit dem eingespritzten Kraftstoff in der Kammer (18) verwirbelbar ist, dadurch gekennzeichnet, daß das Einlaßventil (5) die trichterförmige ausgebildete und sich zum Arbeitskolben (3) hin erweiternde Brennkammer (18) umfaßt, die im Einlaßtrakt (16, 17) des Zylinderdeckels (4) liegt und eine im Bereich der Trichterspitze (19) angeordnete Einspritzdüse (20) aufweist und daß das Einlaßventil (5) als trichterförmige Brennkammer (18) umfangsseitig verschließbare Öffnungen als Spülschlitze (23) aufweist.

2. Brennkraftmaschine nach Anspruch 1, dadurch gekennzeichnet, daß die trichterförmige Brennkammer (18) eine der Strahlenkeule der Einspritzstrahlen (29) angepaßte geometrisch symmetrische Kegelform aufweist.

3. Brennkraftmaschine nach Anspruch 1 oder 2, dadurch gekennzeichnet, daß das Einspritzventil (21) im Schaft (5a) des Einlaßventils (5) angeordnet ist, und mit dem Schaft (5a) in einer hülsenförmigen Aufnahme (12a) eines zylindrischen Stellelements (12) verschiebbar gehalten ist, wobei das freie dem Arbeitskolben (3) zugewandte Ende des Einlaßventils (5) etwa stirnseitig des Stellelements (12) bei geschlossener Stellung sich abstützt.

4. Brennkraftmaschine nach einem der Ansprüche 1 bis 3, dadurch gekennzeichnet, daß das Stellelement (12) in einer Aufnahme (28) des Zylinderdeckels (4) angeordnet ist und mit seinem dem freien Endes des Einlaßventils (5) abgekehrten Ende über ein Druckfederelement (31) unter Spannung stehend an einem Kopfdeckel (11) abgestützt ist.

5. Brennkraftmaschine nach einem der Ansprüche 1 bis 4, dadurch gekennzeichnet, daß das Stellelement (12) zur Einstellung eines variablen Verdichtungsverhältnisses mittels einer gesteuerten Druckbeaufschlagung axial verschiebbar in der Aufnahme (28) des Ventildeckels (4) gehalten ist.

6. Brennkraftmaschine nach einem der Ansprüche 1 bis 5, dadurch gekennzeichnet, daß das Einlaßventil (5) im angrenzenden Bereich zum Zylinder (2) einen in einer horizontalen Ebene angeordneten Drallring (26) aufweist, der schräg angestellte Lamellen (27) umfaßt, deren innere Kanten im Bereich der Flammfront liegen.

7. Brennkraftmaschine nach einem der Ansprüche 1 bis 6, dadurch gekennzeichnet, daß die in der Trichterwandung (22) des Einlaßventils (5) angeordneten Spülschlitze (23) in geschlossener Stellung des Einlaßventils (5) dicht anliegenden Wänden (24) einer Abstützrippe (25) gegenüberstehen.

8. Brennkraftmaschine nach einem der Ansprüche 1 bis 7, dadurch gekennzeichnet, daß im Schaft (5a) des Einlaßventils (5) nahe dem Mündungsbereich der Einspritzdüse (21) mehrere Kühl-Luftschlitze (23a) angeordnet sind.

9. Brennkraftmaschine nach einem der Ansprüche 1 bis 8, dadurch gekennzeichnet, daß das Einlaßventil (5) mit Brennkammer (18), Drallring (26) und Einspritzdüse (21) zu einer Baueinheit zusammengefaßt im zylindrischen Stellelement (12) gehalten und im Zylinderdeckel (4) vertikal verschließbar befestigt ist.

10. Brennkraftmaschine nach einem der Ansprüche 1 bis 9, dadurch gekennzeichnet, daß das Einlaßventil (5) mittig einer senkrechten Mittenebene (X-X) des Zylinders (2) und die Auslaßventile (6, 7) symmetrisch zu beiden Seiten dieser senkrechten Mittenebene (X-X) angeordnet sind und an einer Seite des Einlaßventils (5) ein Anlaßventil (10) und an der gegenüberliegenden Seite ein Dampf- oder Gasventil (9) angeordnet ist.

11. Brennkraftmaschine nach einem der Ansprüche 1 bis 10, dadurch gekennzeichnet, daß das zylindrische Stellelement (12) im oberen Bereich ein mechanischpneumatisches Dämpfungsglied aufweist, das durch die Anordnung von Tellerfedern (31) und Pneumatiksteuerkreise (35) gebildet ist.

12. Brennkraftmaschine nach einem der Ansprüche 1 bis 11, dadurch gekennzeichnet, daß die trichterförmige Brennkammer (18) an den dem Arbeitskolben (3) zugewandte Seite einen Drallring aufweist.

## Claims

1. Internal combustion engine, in particular a diesel engine, having intermittent direct injection of fuel into a combustion chamber (18), into which fresh air may be supplied via an inlet valve (5) and may be swirled with the injected fuel in the chamber (18), characterized in that the inlet valve (5) comprises the combustion chamber (18), which is constructed in the shape of a funnel widening towards the working piston (3), lies in the inlet tract (16, 17) of the cylinder cover (4) and has an injection nozzle (20) disposed in the region of the funnel top (19), and that the inlet valve (5) as a funnel-shaped combustion chamber (18) has openings, which are closable at the periphery, as scavenging slots (23).

2. Internal combustion engine according to claim 1, characterized in that the funnel-shaped combustion chamber (18) has a geometrically symmetrical conical form which is adapted to the jet beam of the injection jets (29).

3. Internal combustion engine according to claim 1 or 2, characterized in that the injection valve (21) is disposed in the shaft (5a) of the inlet valve (5) and is displaceably held with the shaft (5a) in a sleeve-shaped receiver (12a) of a cylindrical control element (12), the free end of the inlet valve (5) facing the working piston (3) being supported in the closed position approximately on the face of the control element (12).

4. Internal combustion engine according to one of claims 1 to 3, characterized in that the control element (12) is disposed in a receiver (28) of the cylinder cover (4) and is supported, by its end remote from the free end of the inlet valve (5), via a pressure spring element (31) under tension on a top cover (11).

5. Internal combustion engine according to one of claims 1 to 4, characterized in that the control element (12), for adjusting a variable compression ratio by means of a controlled pressure admission, is held in an axially displaceable manner in the receiver (28) of the valve cover (4).

6. Internal combustion engine according to one of claims 1 to 5, characterized in that the inlet valve (5), in the region adjacent to the cylinder (2), has a spin ring (26) which is disposed in a horizontal plane and has obliquely set blades (27), whose inner edges lie in the region of the flame front.

7. Internal combustion engine according to one of claims 1 to 6, characterized in that the scavenging slots (23) disposed in the funnel wall (22) of the inlet valve (5), in the closed position of the inlet valve (5), stand opposite close-lying walls (24) of a support rib (25).

8. Internal combustion engine according to one of claims 1 to 7, characterized in that a plurality of cooling air slots (23a) are disposed in the shaft (5a) of the inlet valve (50 close to the mouth region of the injection nozzle (21).

9. Internal combustion engine according to one of claims 1 to 8, characterized in that the inlet valve (5), combined with combustion chamber (18), spin ring (26) and injection nozzle (21) into one structural unit, is held in the cylindrical control element (12) and is fastened in a vertically closable manner in the cylinder cover (4).

10. Internal combustion engine according to one of claims 1 to 9, characterized in that the inlet valve (5) is disposed in the centre of a vertical central plane (X-X) of the cylinder (2) and the outlet valves (6, 7) are disposed symmetrically on either side of said vertical central plane (X-X) and a starting valve (10) is disposed on one side and a vapour or gas valve (9) is disposed on on one side and a vapour or gas valve (9) is disposed on the opposite side of the inlet valve (5).

11. Internal combustion engine according to one of claims 1 to 10, characterized in that the cylindrical control element (12) has, in the upper region, a mechanical-pneumatic damping element which is formed by the arrangement of cup springs (31) and pneumatic control circuits (35).

12. Internal combustion engine according to one of claims 1 to 11, characterized in that the funnel-shaped combustion chamber (18) has a spin ring at its end facing towards the working piston (3).

## Revendications

1. Moteur à combustion interne, en particulier moteur Diesel, avec injection intermittente et directe du combustible dans une chambre de combustion (18), dans lequel l'air frais peut être amené par une soupape d'admission (5), l'air pouvant être mélangé au combustible injecté dans la chambre (18), caractérisé en ce que la soupape d'admission comporte une chambre de combustion (18) en forme d'entonnoir s'élargissant vers le piston-moteur, placée dans la conduite d'admission (16, 17) de la culasse (4) et portant près de la pointe (19) de l'entonnoir un injecteur (20), la soupape d'admission (5) sous forme de chambre de combustion en forme d'entonnoir comportant sur sa périphérie des ouvertures (23) pouvant être fermées et fonctionnant comme lumières de balayage.

2. Moteur à combustion interne, selon la revendication 1, caractérisé en ce que la chambre de combustion (18) en entonnoir présente une forme géométrique symétrique cônique, adaptée à la forme du lobe de projection du faisceau d'injection (29).

3. Moteur à combustion interne, selon une des revendications 1 ou 2, caractérisé en ce que la soupape d'injection (21) est montée dans la tige creuse (5a) de la soupape d'admission (5) et ensemble avec cette tige (5a) est placée de façon mobile dans un alésage (12a) d'un corps (12) cylindrique réglable, tandis que l'extrémité libre de la soupape d'admission (5), située du côté du piston, s'appuie en position fermée sur la face du corps cylindrique réglable (12).

4. Moteur à combustion interne, selon une des revendications 1 à 3, caractérisé en ce que le corps (12) cylindrique réglable est monté dans un alésage (28) de la culasse (4) et que ce corps (12) s'appuie du côté opposé à l'extrémité libre de la soupape d'admission (5) par l'entremise d'un ressort (31) sous tension sur un couvercle (11).

5. Moteur à combustion interne, selon une des revendications 1 à 4, caractérisé en ce que le corps (12) cylindrique réglable est mobile axialement dans l'alésage (28) de la culasse (4) sous le contrôle d'une commande sous pression, ceci afin d'obtenir un rapport de compression variable.

6. Moteur à combustion interne, selon une des revendications 1 à 5, caractérisé en ce que la soupape d'admission (5) est pourvue à proximité du cylindre (2) d'un anneau (26) à turbulence placé dans un plan horizontal, et pourvu de lamelles (27) inclinées, dont les extrémités intérieures se trouvent dans le front des flammes de combustion.

7. Moteur à combustion interne, selon une des revendications 1 à 6, caractérisé en ce que les lumières (23) de balayage dans la paroi (22) en entonnoir de la soupape d'admission (5), se trouvent en position fermée de la soupape d'admission (5) devant des parois (24) tout proche d'un élément de support (25).

8. Moteur à combustion interne, selon une des revendications 1 à 7, caractérisé en ce que plusieurs fentes (23a) pour l'air de refroidissement sont aménagées dans la tige (5a) creuse de la soupape d'admission (5) près de la sortie de l'injecteur (21).

9. Moteur à combustion interne, selon une des revendications 1 à 8, caractérisé en ce que la soupape d'admission (5) forme un ensemble avec la chambre de combustion (12), l'anneau à turbulence (26) et l'injecteur (21), l'ensemble étant monté dans le corps cylindrique (12) et se déplaçant verticalement dans la culasse (4).

10. Moteur à combustion interne, selon une des revendications 1 à 9, caractérisé en ce que la soupape d'admission (5) est placée dans un plan (X-X) vertical se trouvant au milieu du cylindre (2) tandis que les soupapes d'échappement (6, 7) sont placées symétriquement des deux côtés de ce plan central, et en ce que une soupape de démarrage (10) soit placée d'un côté de la soupape d'admission (5) tandis que une soupape à vapeur ou gaz (9) est placée du côté opposé.

11. Moteur à combustion interne, selon une des revendications 1 à 11, caractérisé en ce que le corps (12) cylindrique réglable comporte en sa partie supérieure un élément d'amortissement mécanique et pneumatique, composé de ressorts Belleville (31) et de circuits de commande (35) pneumatiques.

12. Moteur à combustion interne, selon une des revendications 1 à 10, caractérisé en ce que la chambre de combustion (18) en forme d'entonnoir comporte un anneau de turbulences du côté du piston (3).
